# EUROPEAN PATENT APPLICATION

(11) **EP 3 604 699 A1**
(43) Date of publication of application: **05.02.2020**
(21) Application number: 19187999.8
(22) Date of filing: 24.07.2019
(51) Int. Cl.: E03C 1/02, F24D 3/10

(54) **CONNECTING ASSEMBLY FOR HYDRAULIC-SANITARY UTILITIES**

(30) Priority: 03.08.2018 IT 201800007822
(71) Applicant: NUPI INDUSTRIE ITALIANE S.p.A., 21052 Busto Arsizio (VA) (IT)
(72) Inventor: GENONI, Marco, 20020 ARESE (MI) (IT); GIANI, Nicola Achille, 21017 SAMARATE (VA) (IT)
(74) Representative: Branca, Emanuela

(57) **Abstract**

The invention relates to a connecting assembly (1; 11; 21; 31) for hydraulic-sanitary utilities, said connecting assembly comprising a first chamber (2; 12; 22; 32) for hot water and a second chamber (3; 13; 23; 33) for cold water, mutually isolated, both said first chamber (2; 12; 22; 32) and said second chamber (3; 13; 23; 33) comprising an inlet (4'; 14'; 24'; 34';5'; 15'; 25'; 35') and an outlet (4"; 14"; 24"; 34"; 5"; 15''; 25''; 35'') placed on one same connection plane, on said first chamber (2; 12; 22; 32) a single top fitting (4'''; 14'''; 24'" ; 34"') being provided, with an axis substantially perpendicular with respect to the connection plane, for the connection to a hydraulic-sanitary utility, and on said second chamber (3; 13; 23; 33) a single top fitting (5'''; 15'''; 25'''; 35''') being provided, with an axis substantially perpendicular with respect to the connection plane, for the connection to a hydraulic-sanitary utility.

## Description

The present invention relates to a connecting assembly for hydraulic-sanitary utilities with pipes for hot and cold water, respectively arranged so as to form a closed loop for the hot water and a closed loop for the cold water.

More specifically, the invention relates to a connecting assembly of the said type, which allows easier use and installation, as well as easier positioning, a reduction in the number of pieces, and the option of having reduced overall dimensions, consequently reducing stagnation.

It is well-known in the art how, in order to realize hydraulic-sanitary systems, a connection is needed for each hydraulic-sanitary component between the hydraulic connections of the hydraulic-sanitary component and the relative supply pipes comprising loop circuits for the hot water and for the cold water, as well as between the discharge of each hydraulic-sanitary component and the discharge pipe.

The technologies used in the '80s and '90s were characterized by lengthy execution times, by the need to have to act heavily on the wall structures and, in time, the creation of cracks at the wall interventions carried out. They are essentially loop circuits for hot water and for cold water, from which, for each utility to be served, a pipe for the cold water and a pipe for the hot water branches off.

One solution to this problem was proposed in Italian patent n° 1290251, deposited on 4 February 1997, and granted on 22 October 1998 in the name of Mr. Libani Roberto, and entitled "Prefabricated building module for the installation of hydraulic-sanitary components". The solution according to IT'251 comprises prefabricated modules, substantially made of metal material, inside which the hydraulic supply and discharge pipes are arranged, with the relative connections for the relative hydraulic-sanitary apparatus.

This solution solves many of the specific problems of the prior art, however, it is still complicated to put in place, being characterized by the presence of numerous components, as well as the impossibility of realizing the positioning as a function of the specific solution to which it is to be applied and, above all, the impossibility to reduce the overall dimensions.

In the light of the above, the Applicant has realized and perfected a connecting assembly, which can be used in the production of hydraulic-sanitary systems, which overcome the aforesaid problems.

Therefore, a connecting assembly for hydraulic-sanitary utilities as presented in claim 1 forms the specific subject of the present invention.

Further features are comprised in the dependent claims.

The present invention will now be described, by way of a non-limiting illustrative example, according to preferred embodiments thereof, with particular reference to the figures of the attached drawings wherein:
figure 1 is a perspective view of a first embodiment of the connecting assembly for hydraulic-sanitary utilities according to the invention;
figure 2 is a plan view of the connecting assembly of figure 1.
figure 3 is a side view of the connecting assembly of figure 1.
figure 4 is a sectional view taken along the line A-A of figure 2;
figure 5 is a sectional view taken along the line B-B of figure 3;
figure 6 is a perspective view of a second embodiment of the connecting assembly for hydraulic-sanitary utilities according to the invention;
figure 7 is a plan view of the connecting assembly of figure 6;
figure 8 is a side view of the connecting assembly of figure 6;
figure 9 is a sectional view taken along the line A-A of figure 7;
figure 10 is a sectional view taken along the line B-B of figure 8;
figure 11 is a perspective view of a third embodiment of the connecting assembly for hydraulic-sanitary utilities according to the invention;
figure 12 is a plan view of the connecting assembly of figure 11;
figure 13 is a side view of the connecting assembly of figure 11;
figure 14 is a front view of the connecting assembly of figure 11;
figure 15 is a sectional view taken along the line A-A of figure 13; and
figure 16 is a sectional view taken along the line B-B of figure 14;
figure 17 is a perspective view of a fourth embodiment of the connecting assembly for hydraulic-sanitary utilities according to the invention;
figure 18 is a plan view of the connecting assembly of figure 17;
figure 19 is a side view of the connecting assembly of figure 17;
figure 20 is a front view of the connecting assembly of figure 17.

First, it should be pointed out how the embodiments, which will be described below, must only be understood as illustrative. Also the specific dimensions must not be used in any way to limit, in any way, the protective scope of the invention, the features of each embodiment being able to be combined with those of others, and being independent of the measurements of the connecting assembly.

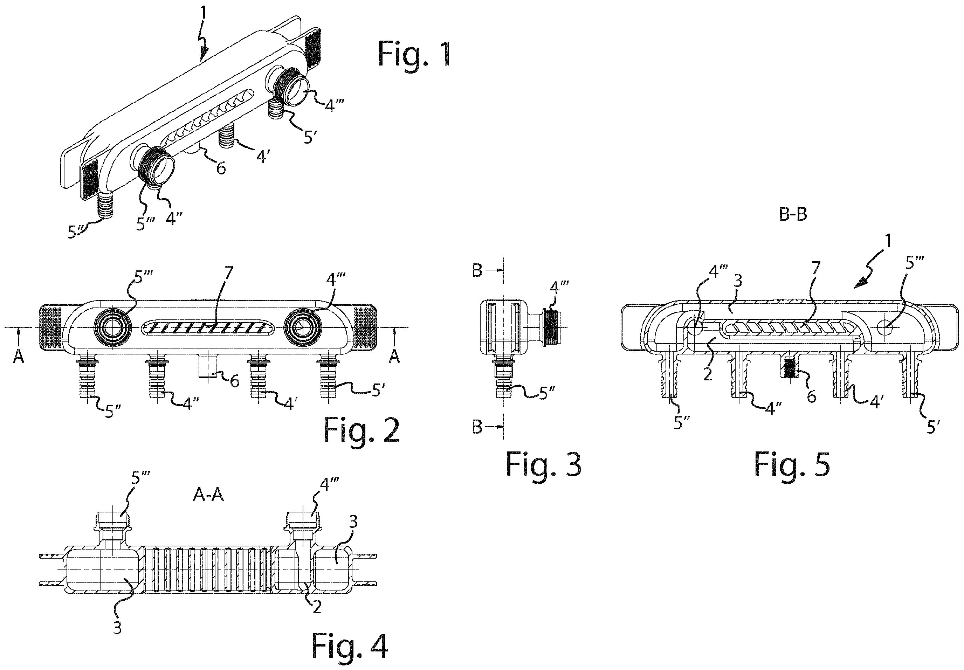

Initially observing figures 1 - 5 of the appended drawings, a first embodiment of the connecting assembly is shown, indicated generally with numerical reference 1.

The connecting assembly 1 is a single block realized with any technology available, for example by 3D printing, traditional molding of any type, etc.

In the connecting assembly 1 a chamber 2 is provided for hot water and a chamber 3 is provided for cold water.

The hot water chamber 2 comprises an inlet 4' and an outlet 4" (which can be inverted with respect to the order shown in the figure, depending on the needs), provided with coupling systems, which do not constitute part of the present invention, and a single top fitting 4"' for the connection with a hydraulic connection (not shown) of the hot water of the specific hydraulic-sanitary element (also not shown).

The chamber 2, through the inlet 4' and the outlet 4", is connected, in series, to the pipes of the loop circuit for hot water.

The inlet 4' and the outlet 4" are mutually arranged side by side along the same side as the connecting assembly 1, i.e. with the axis parallel to each other, and all lying in a single plane of connection to the loop circuit.

The top fitting 4"' has an axis orthogonal to the plane of connection to the loop circuit.

Similarly, the cold water chamber 3 comprises an inlet 5' and an outlet 5" (which can be inverted with respect to the order shown in the figure, depending on the needs), provided with coupling systems, which do not constitute part of the present invention, and a single top fitting 5"' for the connection to a hydraulic connection (not shown) of the cold water of the specific hydraulic-sanitary element (also not shown). Similarly, the chamber 3, through the inlet 5' and the outlet 5", is connected, in series, to the pipes of the loop circuit for the cold water.

The inlet 5' and the outlet 5" are mutually arranged side by side along the same side as the connecting assembly 1, i.e. with the axis parallel to each other, and all lying in a single plane of connection to the loop circuit.

The top fitting 5"' has an axis orthogonal to the plane of connection to the loop circuit.

Preferably, all of the inlets 4', 5' and all of the outlets 4", 5" are mutually arranged side by side along the same side as the connecting assembly 1, i.e. with the axis parallel to each other, and all lying in a single plane of connection to the loop circuit. Furthermore, preferably, the fittings 4"' and 5"' for supplying hot and cold water to the hydraulic-sanitary element, both arranged with the axis orthogonal to the plane of connection to the loop circuit, are preferably placed on the same face as the connecting assembly 1.

A thread 6 is further provided on connecting assembly 1 to attach the collar supporting the discharge fitting.

Finally, the isolation chamber, realized between the hot water chamber 2 and the cold water chamber 3, is indicated with numerical reference 7.

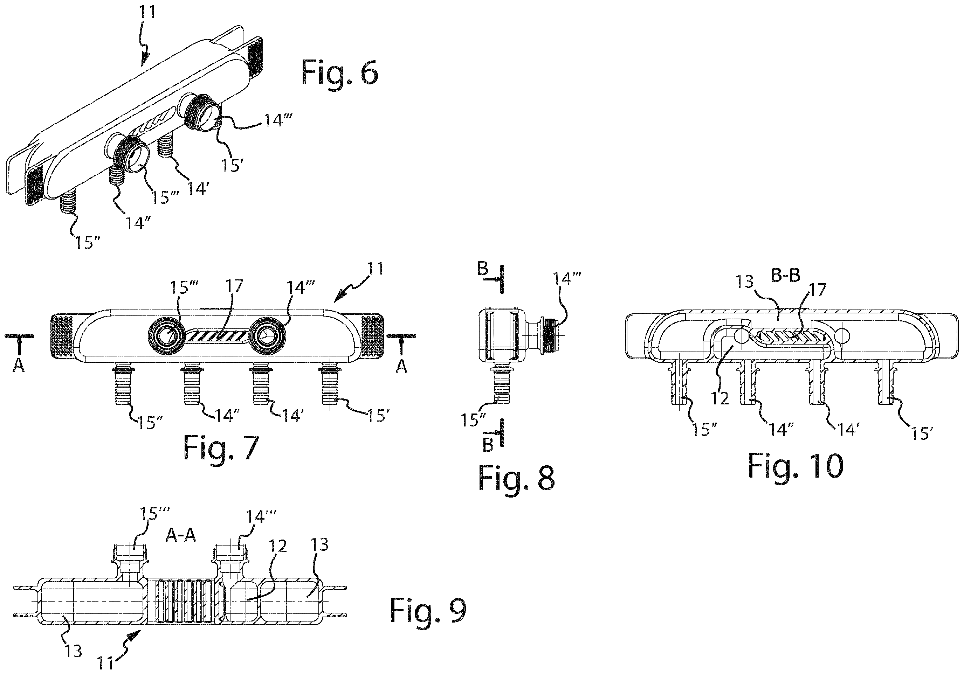

Now, observing figures 6 - 10 of the appended drawings, a second embodiment of the connecting assembly is shown, indicated generically in this case with numerical reference 11.

The identical or similar elements with respect to the embodiment described with reference to figures 1 - 5, will be indicated with the same numerical references, preceded by number 1.

In this case, the substantial difference with respect to the embodiment of figures 1 - 5 lies in the dimensions of the wheelbase (150 mm in the first embodiment and 80 mm in the second embodiment) (but, as said, the dimensions do not constitute a limitation of the protective scope of the invention in any way), and in that in this case the thread 6 is not present.

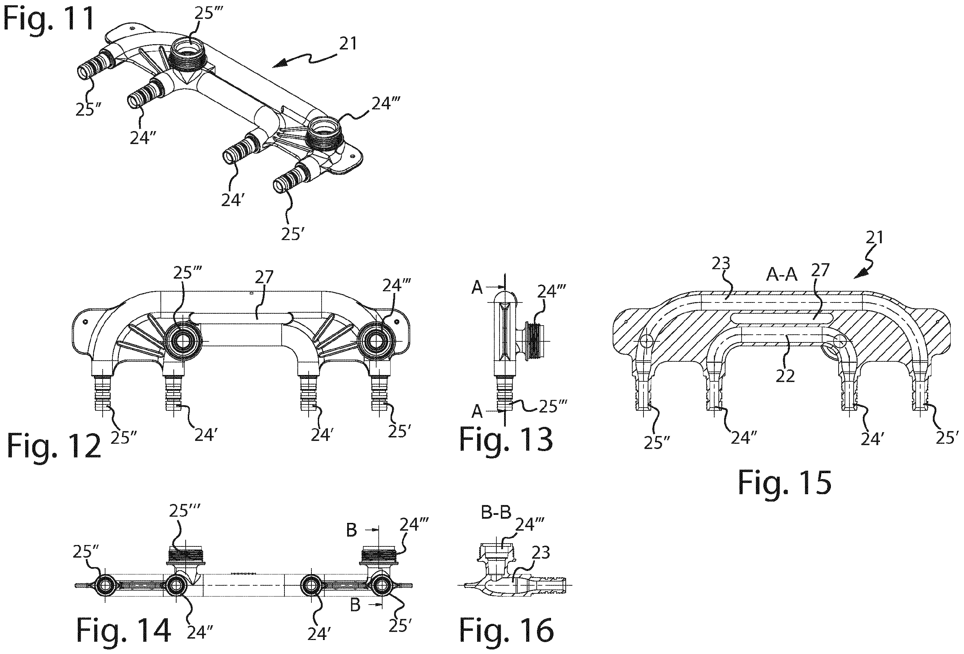

Now, observing figures 11 - 16 of the appended drawings, a third embodiment of the connecting assembly is shown, indicated generically in this case with numerical reference 21.

Also in this case, the identical or similar elements with respect to the embodiment described with reference to figures 1 - 5, will be indicated with the same numerical references, preceded by number 2.

In the illustrated embodiment, the two chambers 2, 3 are, indeed, present as chambers 22 for hot water and 23 for cold water, but they are configured, again in the connecting assembly 21, as pipes 22, 23 respectively, separated from each other in the central section by an isolation space 27.

Also in the case of the embodiment shown in figures 11 - 16 the thread 6 is not comprised.

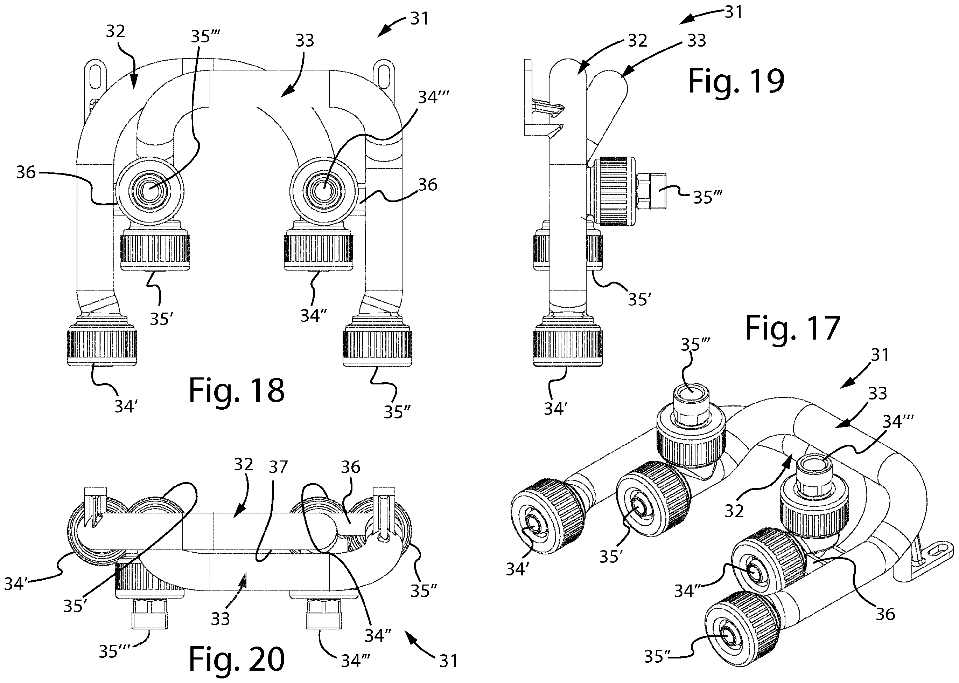

In figures 17 - 20 of the appended drawings, a fourth embodiment of the connecting assembly is shown, indicated generically in this case with numerical reference 31.

Also for this embodiment, the identical or similar elements with respect to the embodiment described with reference to figures 1 - 5, will be indicated with the same numerical references, preceded by number 3.

As for the third embodiment, the two chambers 2, 3 are, indeed, present as chambers 32 for hot water and 33 for cold water, but they are configured, again in the connecting assembly 31, as pipes 32, 33 respectively. The two chambers 32, 33 are joined by at least one fastening element 36, in the embodiment shown two fastening elements, which are stably constrained to the two pipes 32, 33 close to the ends.

In this case, the substantial difference with respect to the embodiment of figures 11 - 16 lies in the fact that despite being set mutually side by side on the connection plane with the axis parallel to each other, the inlets 34', 35' and the outlets 34", 35" are offset in pairs and arranged alternately between the hot water chamber 32 and the cold water chamber 33. In particular, on the connection plane, at a first end, the hot water inlet 34' is flanked by the cold water inlet 35', flanked, in turn, by the hot water outlet 34", which is finally flanked, at the opposite end, by the cold water outlet 35". The hot water inlet 34' and the cold water outlet 35", set at the opposite ends of the connecting assembly 31, are placed in a more advanced position on the connection plane with respect to the hot water inlet 35' and to the cold water outlet 34", positioned between them.

Advantageously, the alternation on the connection plane of the terminal ends of the two chambers 32, 33 allows a reduction in the wheelbase, making the connecting assembly significantly more compact.

In order to allow such alternation on the connection plane of the terminal ends of the two chambers 32, 33, in the fourth embodiment of the connecting assembly 31 according to the invention, the chambers are partially mutually overlapping on the plane orthogonal to the connection plane, while maintaining an isolation space 37.

Also in the case of the embodiment shown in figures 17 - 20 the thread 6 is not comprised.

The relative elements for coupling to the hot and cold water pipes and to the hydraulic connection of the specific hydraulic-sanitary element are shown close to the inlets 34', 34", 35', 35" and the fittings 34"', 35"'.

The connections of the various embodiments of the connecting assembly 1, 11, 21, 31 according to the invention can be formed by any type of coupling, for example, of the threaded, crimped, quick coupling type, by welding, etc.

From the above, it can be seen how the proposed solution according to the present invention provides the operator with a connecting assembly, which offers the following advantages:
- easier use and installation,
- easier positioning,
- reduction in the number of pieces to be used,
- possibility to have a reduced overall dimensions, consequently reducing water stagnation
- a reduced overlapping with the outlet of the same system.

The present invention has been described by way of a non-limiting illustrative example according to preferred embodiments thereof, however, it is understood that variations and/or modifications may be made by the persons skilled in the art, without thereby departing from the relative scope of protection.

## Claims

1. A connecting assembly (1; 11; 21; 31) for hydraulic-sanitary utilities, said connecting assembly comprising a first chamber (2; 12; 22; 32) for hot water and a second chamber (3; 13; 23; 33) for cold water, mutually isolated, both said first chamber (2; 12; 22; 32) and said second chamber (3; 13; 23; 33) comprising an inlet (4'; 14'; 24'; 34';5'; 15'; 25'; 35') and an outlet (4"; 14"; 24"; 34"; 5"; 15"; 25"; 35") placed on one same connection plane, on said first chamber (2; 12; 22; 32) a single top fitting (4'"; 14'"; 24'"; 34"') being provided, with an axis substantially perpendicular with respect to the connection plane, for the connection to a hydraulic-sanitary utility, and on said second chamber (3; 13; 23; 33) a single top fitting (5"'; 15"'; 25"'; 35"') being provided, with an axis substantially perpendicular with respect to the connection plane, for the connection to a hydraulic-sanitary utility.

2. A connecting assembly (1; 11; 21; 31) for hydraulic-sanitary utilities according to claim 1, **characterized in that** the inlet (4'; 14'; 24'; 34'; 5'; 15'; 25'; 35') and the outlet (4"; 14"; 24"; 34"; 5"; 15"; 25"; 35") of the first chamber (2; 12; 22; 32) and the second chamber (3; 13; 23; 33) respectively are all lying on the connection plane and arranged side by side to one another along the same side as the connecting assembly (1; 11; 21; 31) with the axis parallel to each other.

3. A connecting assembly (31) for hydraulic-sanitary utilities according to claim 2, **characterized in that** the inlets (34', 35') and the outlets (34", 35") are offset in pairs and arranged alternating between inlets and/or outlets of the hot water chamber (32) and inlets and/or outlets of the cold water chamber (33).

4. A connecting assembly (31) for hydraulic-sanitary utilities according to claim 3, **characterized in that** on the connection plane, the inlets and/or outlets of the first hot water chamber (32) and of the second cold water chamber (33) respectively, positioned at the opposite ends of the connecting assembly (31), are arranged in a more advanced position with respect to the inlets and/or outlets of the first hot water chamber (32) and of the second cold water chamber (33) respectively, positioned between them.

5. A connecting assembly (31) for hydraulic-sanitary utilities according to claim 4, **characterized in that** the first hot water chamber (32) and the second cold water chamber (33) are partially mutually overlapping on the plane orthogonal to the connection plane.

6. A connecting assembly (1; 11; 21; 31) for hydraulic-sanitary utilities according to any one of the preceding claims, **characterized in that** said first hot water chamber (2; 12; 22; 32) and said second cold water chamber (3; 13; 23; 33) are mutually isolated by an isolation space or chamber (7; 17; 27; 37).

7. A connecting assembly (1; 11; 21; 31) for hydraulic-sanitary utilities according to any one of the preceding claims, **characterized in that** a thread (6) is provided, adapted to attach a collar supporting a discharge fitting.

8. A connecting assembly (1; 11; 21; 31) for hydraulic-sanitary utilities according to one of the preceding claims, **characterized in that** it is made in one piece by means of 3D printing, molding, welding techniques, etc.

9. A connecting assembly (1; 11; 21; 31) for hydraulic-sanitary utilities according to one of the preceding claims, **characterized in that** it is made up of any material suitable for use in hydraulic-sanitary systems.

10. A connecting assembly (1; 11; 21; 31) for hydraulic-sanitary utilities according to one of the preceding claims, **characterized in that** the connections to said inlets and/or outlets consist of any type of coupling, such as, for example, of the threaded, crimped, quick coupling type, by welding, etc.
